# EUROPÄISCHE PATENTSCHRIFT

(11) **EP 4 306 882 B1**
(45) Veröffentlichungstag und Bekanntmachung des Hinweises auf die Patenterteilung: **20.05.2026**
(21) Anmeldenummer: 23183751.9
(22) Anmeldetag: 06.07.2023
(51) Int. Cl.: F25D 11/00, A47F 3/04, F25D 23/12, F25D 25/02, A47B 31/02, A47J 39/00, B65D 1/34

(54) **TRAGEEINRICHTUNG ZUR TEMPERIERUNG ODER ERHITZUNG VON SPEISEN**
SUPPORT DEVICE FOR TEMPERING OR HEATING FOOD
DISPOSITIF DE SUPPORT POUR TEMPÉRER OU CHAUFFER DES ALIMENTS

(30) Priorität: 13.07.2022 DE 202022103937 U; 24.10.2022 DE 102022127990; 26.01.2023 DE 102023101888
(43) Veröffentlichungstag der Anmeldung: 17.01.2024
(73) Patentinhaber: MenüMobil Food Service Systems GmbH, 6401 Inzing (AT)
(72) Erfinder: Abenthung, Johannes, 6401 Inzing (AT)
(74) Vertreter: Rupp, Christian

(56) Entgegenhaltungen:
- EP-A1- 2 316 317
- EP-A1- 3 667 209
- FR-A1- 2 474 852
- FR-A1- 2 775 886

## Beschreibung

Die Erfindung betrifft eine Trageeinrichtung für Speisen.

Die Menge an Speisen, die zum Verzehr vorbereitet und fertig portioniert an Einrichtungen wie Krankenhäuser, Schulen, Kindertageseinrichtungen, Kantinen usw. geliefert werden nimmt ständig zu. Durch die vorgefertigten Mahlzeiten ist es möglich, die aufwändige und kostenintensive Bereitstellung von Küchen in den Einrichtungen zu vermeiden.

Um die vorbereiteten Speisen zu den Einrichtungen zu transportieren, sind Wagen bekannt, die für den Transport von Tabletts mit den darauf befindlichen Speisen vorgesehen sind. Meist sind warme und kalte Speisen, wie z.B. ein Braten und ein Salat, gemeinsam auf einem Tablett zu transportieren. Dazu weisen die bekannten Wagen zwei für unterschiedliche Temperaturen vorgesehene Kammern auf. Die eine Kammer nimmt dabei den Bereich der Tabletts mit den kühlen Speisen und die andere Kammer den Bereich der Tabletts mit den warmen Speisen auf. Um einen gegenseitigen Temperaturaustausch zwischen den Speisen zu vermeiden ist eine Trennwand zwischen den Kammern vorgesehen.

Die FR 2 684 281 A1 zeigt einen solchen Transportwagen zum Aufbewahren und Verteilen von Speisen. Der Transportwagen ist mit einer isolierenden vertikalen Trennwand ausgestattet, die mit Schlitzen zur Aufnahme von Speisentabletts mit zwei Zonen versehen ist. Eine Zone des Speisetabletts ist für warme Speisen und die andere für kalte Speisen vorgesehen. Der Transportwagen ist mit einer Einheit, die mit einem Kühlabschnitt und einem Kühl- und Heizabschnitt ausgestattet ist, koppelbar. Diese Einheit verbleibt fest und dauerhaft an einem festen Ort, z. B. in Krankenhausstationen. Der Transportwagen wird während der Aufbewahrung bzw. der Wiedererwärmung der warm zu servierenden Mahlzeiten mit dieser Einheit gekoppelt. Ein Nachteil ist der hohe Energiebedarf zum Erhitzen der Speisen.

FR 2 775 886 A1 beschreibt ein Tablett, das zum Tragen von Geschirr bestimmt ist. Eine erste Zone des Tabletts ist vorgesehen um das Geschirr, und damit die darin befindlichen Speisen, durch Kontakt von unten mit einer Heizplatte zu erhitzten.

Der Erfindung liegt somit die Aufgabe zugrunde eine Trageeinrichtung für Speisen zur raschen und energieeffizienten Erhitzung oder Temperierung der Speisen zu schaffen, die es ermöglichen, vorbereitete Speisen standortunabhängig auf die dafür vorgesehene Temperatur effizient zu erwärmen und/oder zu kühlen.

Die Aufgabe wird durch eine Trageeinrichtung für Speisen mit den Merkmalen des Anspruchs 1 gelöst. Vorteilhafte Weiterbildungen sind Gegenstand der hierauf rückbezogenen Unteransprüche.

Die erfindungsgemäße Trageeinrichtung für Speisen weist einen Träger auf, der eine obere Fläche und eine untere Fläche enthält. Speisen und/oder Speisebehältnisse sind auf die obere Fläche aufbringbar. Die Trageeinrichtung weist mindestens eine Thermozone zum Transport von Wärmeenergie zwischen der unteren und der oberen Fläche auf. Dazu ist die Thermozone aus einem thermisch leitfähigen Material ausgebildet. Die Thermozone erstreckt sich zumindest von der die Thermozone umgebenden oberen Fläche bis zur die Thermozone umgebenden unteren Fläche der Trageeinrichtung. Die Thermozone kann an ihrer unteren Fläche zur Aufnahme der eingeleiteten Wärmeenergie strukturiert ausgebildet sein.

Die Trageeinrichtung für Speisen mit der Thermozone ermöglicht in besonders vorteilhafter Weise ein energieeffizientes Erwärmen bzw. Kühlen von auf der Thermozone befindlichen Speisen. Besonders vorteilhaft ist, dass die Wärme bzw. Kälte äußerste effektiv mit Hilfe der strukturierten unteren Fläche aufgenommen und zur oberen Fläche, auf der sich die Speisen befinden, transportiert wird.

Die Thermozone der Trageeinrichtung für Speisen besteht bevorzugt aus einem Metall, besonders bevorzugt aus einer Aluminiumlegierung. Die Thermozone kann auch aus einem thermisch leitfähigen Kunststoff bestehen. Der für die Thermozone vorgesehene thermisch leitfähige Kunststoff weist bevorzugt eine Wärmeleitfähigkeit von 5 W/mK bis 20 W/mK, besonders bevorzugt eine Wärmeleitfähigkeit von 10 W/mK bis 20 W/mK und weiter besonders bevorzugt eine Wärmeleitfähigkeit von 15 W/mK bis 20 W/mK auf.

Die Thermozone aus einem der oben genannten Materialien ist besonders vorteilhaft, da hierdurch ein verlustarmer Transport von Wärme- und Kälteenergie zur Verfügung gestellt wird.

Die Thermozone ist bevorzugt so ausgelegt, dass sie in direkten Kontakt mit dem Speisebehältnis kommt. Der direkte Kontakt zwischen Thermozone und Speisebehältnis ermöglicht vorteilhaft eine besonders gute thermische Kopplung. Durch die gute thermische Kopplung wird die in der Thermozone verfügbare Wärme oder Kälte besonders verlustarm auf das Speisebehältnis und damit auf die zu temperierenden oder erhitzenden Speisen übertragen.

Die strukturierte untere Fläche der Thermozone der Trageeinrichtung zum Transport von Speisen weist bevorzugt eine Lamellenform oder eine Wellenstruktur auf.

Mit der bevorzugten Struktur in Lamellenform oder der Wellenstruktur der unteren Fläche der Thermozone wird in besonders vorteilhafter Weise die Oberfläche vergrößert. Durch die vergrößerte Oberfläche wird in effektiver Weise die zur Verfügung gestellte Wärme- oder Kälteenergie aufgenommen. Die Wellenstruktur ermöglicht in besonders vorteilhafter Weise ein einfaches Reinigen der Trageeinrichtung, insbesondere im Bereich der Thermozone.

Bevorzugt ist die strukturierte Fläche der Thermozone so geformt, dass ein darauf gerichteter temperierter Luftstrom in eine vorherbestimmte Richtung gelenkt wird. Das Lenken des temperierten Luftstroms erzeugt in besonders vorteilhafter Weise einen verwirbelungsfreien Luftstrom, der eine gleichmäßige Wärmeverteilung in der Thermozone erzeugt.

Die Trageeinrichtung weist bevorzugt an deren unteren Fläche mindestens zwei Erhebungen auf. Dabei sind die Erhebungen so bemessen, dass sie über die strukturierte Fläche der Thermozone hinausragen. So wird in besonders vorteilhafter Weise ermöglicht, dass die Trageeinrichtung auf ebenen Flächen abgestellt werden kann. Mit den Erhebungen wird ein Wärmeverlust durch den direkten Kontakt der Thermozone mit der Oberfläche der Abstellfläche vermieden.

Die Thermozone weist besonders bevorzugt einen einstückig angeformten Rand auf, der zwischen der oberen Fläche und der unteren Fläche des Trägers eingebettet ist. Der einstückig angeformte Rand leitet in vorteilhafter Weise die durch die Gewichtskraft der auf der Thermozone befindlichen Speisen auftretenden Belastungen in den Träger ab. So wird verhindert, dass sich die Thermozone von dem Träger löst.

Die Trageeinrichtung weist bevorzugt einen verjüngten Aufnahmebereich auf. Der verjüngte Aufnahmebereich ist dazu ausgelegt, durch eine thermische Trennwand durchzureichen. Dabei erstreckt sich der verjüngte Aufnahmebereich längs einer Einschieberichtung in ein System zur Temperierung oder Erhitzung von Speisen. Der verjüngte Aufnahmebereich für die thermische Trennwand verhindert in besonders vorteilhafter Weise einen Luftstrom zwischen den durch die Trennwand unterteilten Bereichen. Somit wird ein Temperaturaustausch zwischen den durch die Trennwand getrennten Bereichen der Trageeinrichtung verhindert. Bevorzugt weist die Trageeinrichtung einen Halter zur Aufnahme einer Beschriftung und/oder einer Informationskarte auf. So wird in besonders vorteilhafter Weise ermöglicht, an der Trageeinrichtung Informationen zu Speisen und einer Person, der die Trageeinrichtung zugeordnet ist, anzubringen.

Der Halter ist in bevorzugter Weise auf der Trageeinrichtung in einem vorderen Randbereich so angeordnet, dass dabei die Beschriftung und/oder Informationskarte lesbar ist, wenn die Trageeinrichtung in das System zum Temperieren von Speisen eingeschoben ist. So lässt sich in besonders vorteilhafter Weise die benötigte Trageeinrichtung schnell in dem System zum Temperieren von Speisen finden und somit eine starke Temperaturänderung der Speisen vermeiden.

Der Halter ist in bevorzugter Weise so ausgelegt, dass die Beschriftungen und/oder Informationskarte in einem Winkel von 30° bis 50° und bevorzugt von 40° bis 45° zur oberen Fläche der Trageeinrichtung ausgerichtet lesbar ist. Durch eine solche Ausrichtung ist es in besonders vorteilhafter Weise möglich, die an den Trageeinrichtungen angebrachten Informationen in nahezu jeder Ebene in dem System zum Temperieren von Speisen zu lesen.

Der Halter und der Träger der Trageeinrichtung sind bevorzugt einstückig ausgeführt. Durch die einstückige Ausführung lässt sich die Trageeinrichtung besonders einfach fertigen. Außerdem ermöglicht die einstückige Ausführung eine besonders einfache Reinigung der Trageeinrichtung mit dem Halter.

Nachfolgend werden Ausführungsbeispiele der Erfindung anhand der Zeichnung beispielhaft beschrieben. In der Zeichnung zeigen:
- FIG. 1:: ein Ausführungsbeispiel eines erfindungsgemäßen Systems zur Temperierung oder Erhitzung von Speisen;
- FIG. 2:: eine Innenansicht des Systems zur Temperierung oder Erhitzung von Speisen mit zwei Kammern gemäß einem erfindungsgemäßen Ausführungsbeispiel;
- FIG. 3a:: ein Ausführungsbeispiel einer erfindungsgemäßen Trageeinrichtung für Speisen;
- FIG. 3b:: ein Ausführungsbeispiel einer erfindungsgemäßen Trageeinrichtung für Speisen mit verjüngtem Aufnahmebereich für eine Trennwand;
- FIG. 4:: eine Schnittdarstellung der Trageeinrichtung mit versenkter Thermozone gemäß einem Ausführungsbeispiel, das nicht Teil der Erfindung ist.
- FIG. 5:: eine Schnittdarstellung der Trageeinrichtung mit zwei Erhebungen an deren unteren Fläche gemäß einem erfindungsgemäßen Ausführungsbeispiel;
- Fig. 6:: eine vergrößerte Schnittdarstellung einer Thermozone mit einstückig angeformtem Rand in der Trageeinrichtung gemäß einem erfindungsgemäßen Ausführungsbeispiel;
- FIG. 7a:: eine Schnittdarstellung einer Thermozone mit dreieckförmig strukturierter unteren Fläche gemäß einem erfindungsgemäßen Ausführungsbeispiel;
- FIG. 7b:: eine Schnittdarstellung einer Thermozone mit wellenförmig strukturierter unteren Fläche gemäß einem erfindungsgemäßen Ausführungsbeispiel;
- FIG. 7c:: eine Schnittdarstellung einer Thermozone mit lamellenförmig strukturierter unteren Fläche gemäß einem erfindungsgemäßen Ausführungsbeispiel; und
- FIG. 7d:: eine Thermozone mit bogenförmig angeordneter Struktur an deren unteren Fläche gemäß einem erfindungsgemäßen Ausführungsbeispiel.

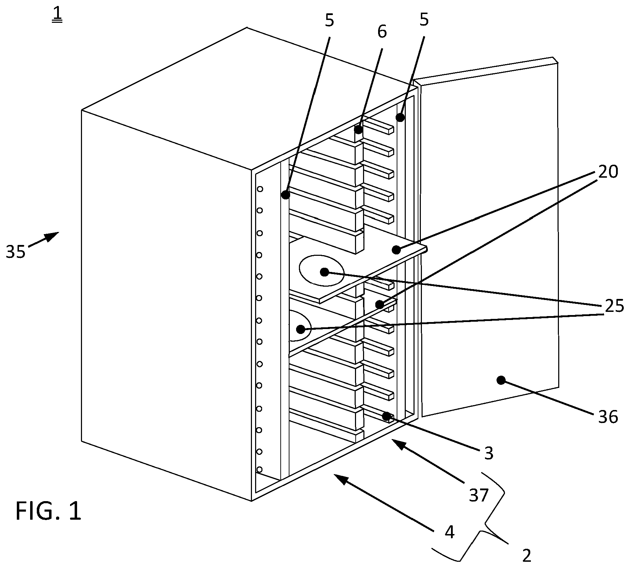

FIG. 1 zeigt ein Beispiel zu einem System 1 zur Temperierung oder Erhitzung von Speisen. Das System wird durch ein kastenförmiges, dem System zugehöriges Gehäuse 35 umschlossen. Dieses Gehäuse besteht mindestens aus äußeren Seitenwänden, einer äußeren Rückwand, einem äußeren Boden, einem äußeren Deckel und einer Türe 36. Das Gehäuse 35 kann neben der Kastenform auch in Formen gestaltet sein, die beispielsweise eine Integration in ein Transportmittel erlauben.

Damit ein Temperaturaustausch zwischen Innenraum und Außenseite des Gehäuses minimiert wird, ist das Gehäuse isoliert aufgebaut. Die oben beschriebenen Elemente des Gehäuses sind im Beispiel sandwichförmig ausgebildet. Eine erste und eine dritte Schicht bildet die Außen- bzw. Innenfläche des Gehäuses. Zwischen dieser ersten und dritten Schicht ist als zweite Schicht eine Isolationsschicht vorgesehen. Diese Isolationsschicht besteht aus einem aufgeschäumten Kunststoff, einer Mineralwolle oder für besondere Anforderungen aus einem zumindest annähernd luftleeren Raum.

Das System zur Temperierung oder Erhitzung von Speisen enthält weiter mindestens einen Raum 2 zur Aufnahme mehrerer erfindungsgemäßer Trageeinrichtungen 20 für Speisen. Dieser Raum 2 ist innerhalb des Gehäuses angeordnet. In dem Raum 2 sind die Trageeinrichtungen 20 vertikal übereinander angeordnet und bilden jeweils eine horizontale Fläche. Dabei sind die Trageinrichtungen 20 beabstandet angeordnet. Der Abstand zwischen den Trageeinrichtungen ist mindestens so groß, dass die in dem System befindlichen auf den Trageeinrichtungen 20 angeordneten Speisen oder Behältnisse für die Speisen nicht mit der darüber angeordneten Trageeinrichtung 20 in Berührung kommen können.

Das System enthält Halteeinrichtungen 3, um die Trageeinrichtungen für Speisen in der oben beschriebenen vertikalen Weise aufzunehmen. Diese Trageeinrichtungen 20 sind in dem Raum 2 zur Aufnahme der Trageeinrichtungen angeordnet. Die Halteeinrichtungen 3 bestehen aus Leisten auf welchen die Trageeinrichtungen 20 so aufliegen, dass eine vorgesehene vertikale Position eingehalten wird. Die Halteeinrichtungen 3 können auch als Schienen vorgesehen sein. So kann ein Kippen der Trageeinrichtung 20 verhindert werden, wenn die Trageeinrichtung 20 nicht vollständig in den Raum 2 eingeschoben ist.

Der Raum 2, von dem die Trageeinrichtungen 20 aufgenommen sind, ist im Ausführungsbeispiel in zumindest zwei Kammern 4, 37 unterteilt. Die in FIG. 1 dargestellten zwei Kammern 4, 37 erstrecken sich jeweils bis zumindest einer Seitenwand 5. Die zumindest eine Seitenwand 5 ist beabstandet zum Gehäuse 35 angeordnet. Wie in diesem Ausführungsbeispiel dargestellt, erstrecken sich die Trageeinrichtungen 20 über die beiden Kammern 4, 37.

Jede Kammer der beiden Kammern 4, 37 ist unabhängig temperierbar. So können beispielsweise Speisen, die in einer ersten Kammer 4 angeordnet sind, erhitzt und eine gleichzeitig weitere Speise, die in einer zweiten Kammer 37 angeordnet sind, gekühlt werden. Dazu sind die Kammern 4, 37 durch eine Trennwand 6 gegenseitig thermisch isoliert. Die Trennwand ist dazu aus einem Kunststoff mit besonders niedrigem Wärmeleitwert oder einem isolierenden Schichtsystem aufgebaut. Bei dem Schichtsystem ist eine erste und eine dritte Schicht vorgesehen, die die Außenflächen der Trennwand 6 bilden. Zwischen diesen Außenflächen ist als zweite Schicht eine Isolationsschicht vorgesehen. Diese Isolationsschicht besteht aus einem aufgeschäumten Kunststoff, einer Mineralwolle oder, für besondere Anforderungen, aus einem zumindest annähernd luftleeren Raum.

Alternativ ist auch ein Andocken eines Aufnahmewagens an eine Andockstation denkbar. Dabei ist auch denkbar, dass der zu heizende Bereich zunächst gekühlt wird, bevor er erwärmt wird. Dabei kann das Kühlaggregat der Kühlung für den zu kühlenden Bereich mitbenutzt werden.

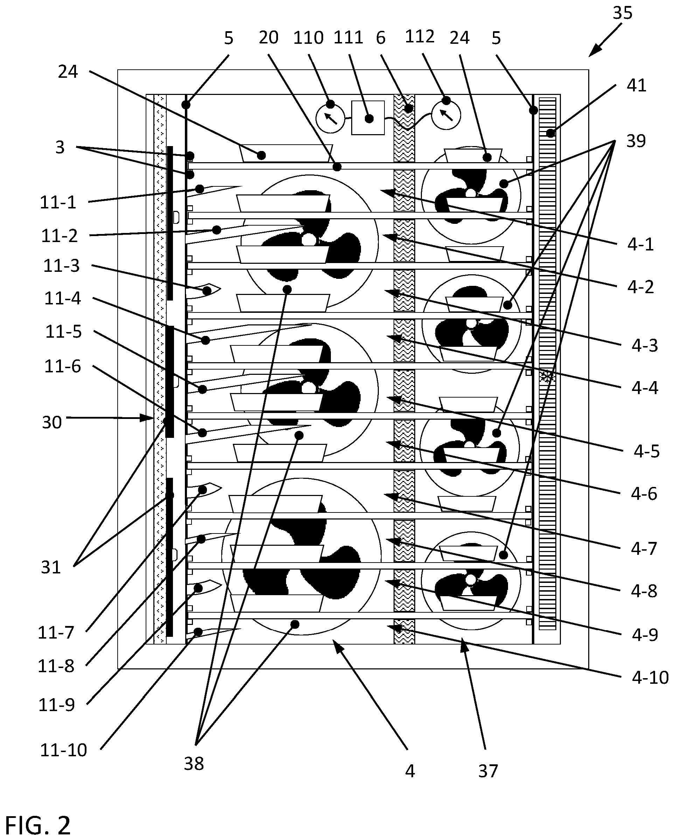

FIG. 2 zeigt eine Innenansicht zu dem Beispiel des Systems 1 zur Temperierung oder Erhitzung von Speisen 24 mit zwei Kammern 4, 37. Die Blickrichtung entspricht dabei der Richtung, in die die erfindungsgemäßen Trageeinrichtungen 20 in das System 1 eingeschoben werden.

An den Seitenwänden 5 sind Halteeinrichtungen 3 für die erfindungsgemäßen Trageeinrichtungen 20 angebracht und beispielsweise als Schienen ausgeführt. Die Tageeinrichtungen 20 werden von der Vorderseite des Systems 1 in die Halteeinrichtungen 3 eingeschoben. Eine Ausführung der Halteeinrichtungen 3 in Form von Schienen stellt sicher, dass die erfindungsgemäßen Trageeinrichtungen nicht aus den Halteeinrichtungen heraus kippen können, selbst wenn diese nur teilweise eingeschoben sind.

Zur thermischen Trennung der beiden Kammern 4, 37 ist eine Trennwand 6 vorgesehen. In FIG. 2 ist deutlich zu erkennen, dass die Trennwand 6 im Bereich der erfindungsgemäßen Trageeinrichtungen 20 unterbrochen ist, um das Einschieben der Trageeinrichtungen zu ermöglichen. Die eingeschobenen erfindungsgemäßen Trageeinrichtungen 20 reichen durch die Unterbrechungen der Trennwand 6 hindurch. Die durch die Unterbrechungen entstehenden Schlitze in der Trennwand 6 können Dichtelemente enthalten. Die Dichtelemente dienen dann zur Unterbindung eines Luftstroms zwischen den Kammern 4, 37 mit unterschiedlichen Temperaturniveaus.

In dem in FIG. 2 dargestellten Beispiel ist die durch die Trennwand 6 abgetrennte linke Kammer 4 zum Erhitzen von Speisen 24 vorgesehen. An der inneren Rückwand 40 sind drei Ventilatoren 38 angeordnet (siehe auch FIG. 2). Mit Hilfe der Ventilatoren 38 wird ein zu erhitzender Luftstrom (109 aus FIG. 2) erzeugt. Als Wärmequelle dient hierbei im Beispiel eine zwischen dem Gehäuse 35 und der linken Seitenwand 5 angeordnete Wärmeerzeugungseinrichtung 30. Die Wärmeerzeugungseinrichtung 30 enthält in diesem Beispiel drei Heizeinheiten 31. Mit Hilfe der drei Heizeinheiten wird der vorbeiströmende Luftstrom erhitzt.

Der heiße Luftstrom wird über Austrittsöffnungen 11, 11-1, 11-2 ... 11-10 auf jeweils eine untere Fläche der Trageeinrichtungen 20 gerichtet. Dabei sind die Austrittsöffnungen so gestaltet, dass ein optimales Anströmen des zu erhitzenden Bereichs der jeweiligen erfindungsgemäßen Trageeinrichtung 20 erreicht wird. Beispielsweise sind die Austrittsöffnungen 11-1, 11-8 und 11-9 als kurze röhrenförmige Elemente mit einem zur erfindungsgemäßen Trageeinrichtung 20 abgeschrägten Ende ausgeführt. Die Austrittsöffnungen 11-2, 11-4, 11-5 und 11-6 sind beispielsweise als lange röhrenförmige Elemente mit einem zur erfindungsgemäßen Trageeinrichtung 20 abgeschrägten Ende ausgeführt, so dass ein gezieltes punktuelles Erwärmen der jeweiligen erfindungsgemäßen Trageeinrichtung 20 erreicht wird. Eine weitere geeignete Form für die Austrittsöffnungen 11-3, 11-7 und 11-9 ist eine bogenförmige Ausführung. Des Weiteren sind beispielsweise kastenförmige Austrittsöffnungen geeignet, den heißen Luftstrom auf einen größeren Bereich der erfindungsgemäßen Trageeinrichtung 20 zu richten. Außerdem können die Austrittsöffnungen durch Lamellen in der Seitenwand 5 realisiert sein. Die Ausführung der Austrittsöffnungen ist nicht auf die oben beschriebenen Formen beschränkt.

Die rechte Kammer 37 des Systems 1 ist in diesem Beispiel zum Kühlen der darin befindlichen Speisen 24 vorgesehen. Um den zu kühlenden Luftstrom 10 zu erzeugen, sind hier beispielhaft vier Ventilatoren 39 vorgesehen. Des Weiteren ist ein Kältegerät 41 vorgesehen, dessen Wärmetauscher zwischen dem Gehäuse 35 und der rechten Seitenwand 5 angeordnet ist. Der so erzeugte kalte Luftstrom wird, wie bereits beschrieben, über einen Spalt zwischen Tür 36 und der Seitenwand 5 in Richtung der Trageeinrichtungen geleitet. Es ist jedoch auch möglich Austrittsöffnungen entsprechend der linken Kammer 4 vorzusehen.

In der linken Kammer 4 ist in diesem Beispiel ein linker Drucksensor 110 vorgesehen. Dieser Drucksensor misst einen durch die Ventilatoren 38 erzeugten Unterdruck der linken Kammer 4. Dieser Unterdruck der linken Kammer 4 entsteht durch den mit Hilfe der Ventilatoren 38 erzeugten Luftstrom in Richtung der Austrittsöffnungen 11-1 ... 11-10. Die rechte Kammer 37 weist einen rechten Drucksensor 112 auf, der einen durch die Ventilatoren 39 erzeugten Unterdruck der rechten Kammer 37 misst. Der linke Drucksensor 110 und der rechte Drucksensor 112 sind mit einer Druckregeleinheit 111 verbunden. Außerdem ist die Druckregeleinheit mit jedem der Ventilatoren 38 der linken Kammer 4 und jedem der Ventilatoren 39 der rechten Kammer 4 verbunden, wobei die Verbindungen dazu vorgesehen sind, die Drehzahl der Ventilatoren 38 und 39 zu steuern. Die Druckregeleinheit 111 vergleicht den durch den linken Drucksensor 110 und den rechten Drucksensor 112 gemessenen Unterdruck. Stellt die Druckregeleinheit 111 eine Druckdifferenz zwischen dem Unterdruck der linken Kammer 4 und der rechten Kammer 37 fest, werden die Drehzahlen der Ventilatoren 38 und 39 so gesteuert, dass die Druckdifferenz weitgehend null ist.

Um die Druckregelung zu vereinfachen, werden beispielsweise die Ventilatoren 38 der linken Kammer 4 bei einer konstanten Drehzahl betrieben. Der so erzeugte Unterdruck in der linken Kammer 4 wird durch den linken Drucksensor 110 gemessen. Der durch den linken Drucksensor 110 gemessene Wert wird in der Druckregeleinheit 111 als Führungsgröße herangezogen. Nun wird die Drehzahl der Ventilatoren 39 der rechten Kammer 37 so geregelt, dass der durch den rechten Drucksensor 112 gemessene Wert dem Wert der Führungsgröße entspricht. Durch diese Regelung herrschen in der linken Kammer 4 und der rechten Kammer 37 nahezu gleiche Druckverhältnisse. Somit ist es möglich, auf eine Dichtung zwischen Trennwand 6 und Trageeinrichtung 20 zu verzichten, ohne dass ein Temperaturausgleich zwischen der linken Kammer 4 und der rechten Kammer 37 erfolgt.

Die Führungsgröße kann in einem anderen Beispiel auch durch den Druck in der rechten Kammer 37 zur Verfügung gestellt werden. Die Regelung des Druckausgleichs erfolgt dann über eine Steuerung der Ventilatoren 38 der linken Kammer 4. Es sind auch weitere Regelungen denkbar, bei denen jede Kammer eine getrennte Regelung mit gemeinsamer Führungsgröße aufweist.

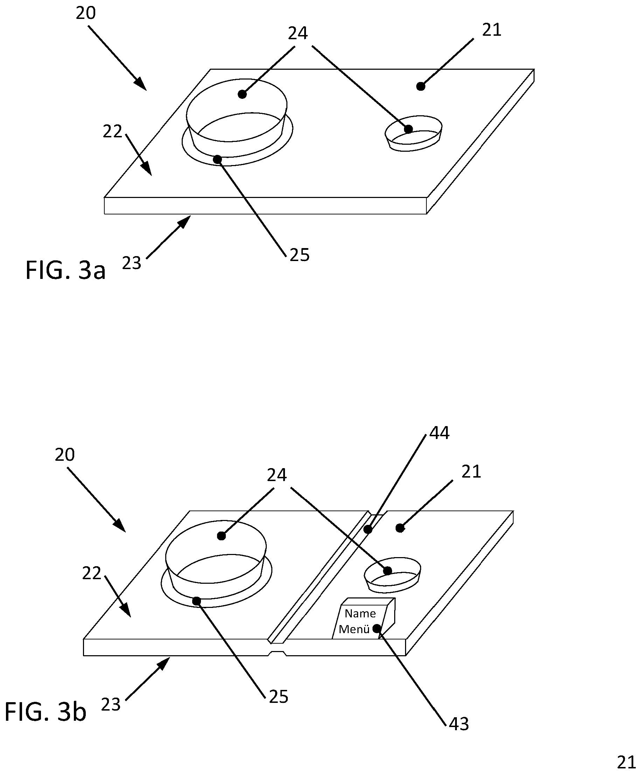

FIG. 3a zeigt ein Ausführungsbeispiel der erfindungsgemäße Trageeinrichtung 20 für Speisen. Die Trageeinrichtung 20 enthält einen Träger 21 und mindestens eine Thermozone 25. In diesem Ausführungsbeispiel ist nur eine Thermozone 25 dargestellt. Die Anzahl der Thermozonen 25 ist nicht beschränkt. Die Thermozone 25 kann sich auch über den gesamten zu beheizenden Bereich erstrecken. Die Größe der Thermozone 25 ist dabei so ausgelegt, dass sie die gesamte Teilfläche einer der Thermozone 25 zugehörigen Kammer 4, 37 einnimmt. Die obere Fläche 22 der Trageeinrichtung 20 ist dazu vorgesehen, dass darauf Speisen und/oder Speisebehältnisse 24 aufbringbar sind. Die Form der Thermozone 25 ist nicht auf eine Kreisform beschränkt. Die Thermozone 25 kann auch eine ovale Form, eine rechteckige Form oder eine beliebige andere Form aufweisen.

FIG. 3b zeigt ein weiteres Ausführungsbeispiel der erfindungsgemäße Trageeinrichtung 20 für Speisen. Der Träger 21 weist in diesem Ausführungsbeispiel einen verjüngten Aufnahmebereich 44 für die Trennwände, einen Halter 43 für Beschriftungen und/oder eine Informationskarte auf. In dem Halter können Beschriftungen und/oder Informationskarten mit personenbezogene Daten aufgenommen werden, die alle notwendigen Information zu den Speisen bzw. Speisenempfängern enthalten. Um die Lesbarkeit zu verbessern, ist der Halter vorzugsweise so ausgelegt, dass die Beschriftungen und/oder die Informationskarte in einem Winkel von ca. 45° zur oberen Fläche 22 befestigt ist.

Der Halter 43 ist auf der Trageeinrichtung im vorderen Randbereich angeordnet, so dass die Beschriftung und/oder Informationskarte lesbar ist, wenn die Trageeinrichtung in das System 1 zum Temperieren von Speisen eingeschoben ist. Außerdem ist der Halter 43 beabstandet zu den seitlichen Rändern und/ oder einem Aufnahmebereich 44, der in diesem Ausführungsbeispiel verjüngt ist, für die Trennwand 6 der Trageeinrichtung 20 angeordnet. Der Aufnahmebereich kann in weiteren Ausführungsbeispielen erhaben oder bündig mit der unteren Fläche 23 und der oberen Fläche 22 der Trageeinrichtung 20 sein. Durch den Abstand des Halters 43 zu den seitlichen Rändern wird sichergestellt, dass ein ungehindertes Einschieben der Trageeinrichtung 20 in das System 1 zum Temperieren von Speisen möglich ist. Der Halter 43 und der Träger 21 ist in diesem Ausführungsbeispiel einstückig ausgeführt. Der Halter 43 kann auch separat an dem Träger 21 durch Aufstecken, Aufschrauben und/oder Aufkleben angebracht sein.

In FIG. 3b ist eine Thermozone 25 mit einer Kreisform dargestellt. Die Kreisform ist so bemessen, dass sie größer als ein Durchmesser des Speisebehältnisses ist. Die Form der Thermozone 25 ist nicht auf eine Kreisform beschränkt. Die Thermozone 25 kann auch eine ovale Form, eine rechteckige Form oder eine beliebige andere Form aufweisen. Die Größe der Thermozone 25 kann in weiteren Ausführungsformen so bemessen sein, dass sich die Thermozone 25 über die gesamte Fläche eines jeweiligen Teilbereichs erstreckt. Dieser jeweilige Teilbereich ist durch die seitlichen Ränder der Trageeinrichtung 20 und den verjüngten Aufnahmebereich 44 für die Trennwände begrenzt. Die Größe der Thermofläche 25 kann in diesem Teilbereich auch entsprechend der verwendeten Speisebehältnisse 24 kleiner bemessen sein.

Die Thermozone 25 dient zum Transport von Wärmeenergie zwischen der unteren Fläche 23 und der oberen Fläche 22 der Trageeinrichtung 20. Dazu besteht die Thermozone 25 aus einem thermisch leitfähigen Material

Die beste Wärmeübertragung in der Thermozone 25 lässt sich mit einem Metall erreichen. Ist die Thermozone 25 aus Metall vorgesehen, besteht sie bevorzugt aus einer Aluminiumlegierung. Eine Thermozone 25 aus Metall weist eine gute thermische Leitfähigkeit bei geringem Gewicht und Unempfindlichkeit gegenüber Chemikalien, wie sie in Lebensmitteln vorkommen oder zu Reinigungszwecken eingesetzt werden, auf. Eine weitere geeignete Metallgruppe sind lebensmittelgeeignete Edelstähle. Diese weisen eine etwas geringere Wärmeleitfähigkeit und ein höheres Gewicht auf. Vorteilhaft bei der Verwendung von lebensmittelechtem Edelstahl ist die hohe Korrosionsbeständigkeit und die nahezu vollständige Unempfindlichkeit gegenüber sauren und basischen Reinigungsmitteln.

Die Thermozone 25 kann auch aus einem thermisch leitfähigen Kunststoff bestehen. Hier eignen sich z.B. Kunststoffe, die auf einem kurzkettigen Polyamid (PA 6), einem langkettigen Polyamid (PA 12), einem Polypropylen (PP), einem Polyphenylensulfid (PPS) oder einem Polyurethan (PUR) basieren. Diese Kunststoffe werden mit Additiven ausgerüstet, um deren Wärmeleitfähigkeit auf Werte von 5 W/mK bis 20 W/mK, bevorzugt von 10 W/mK bis 20 W/mK und besonders bevorzugt von 15 W/mK bis 20 W/mK einzustellen.

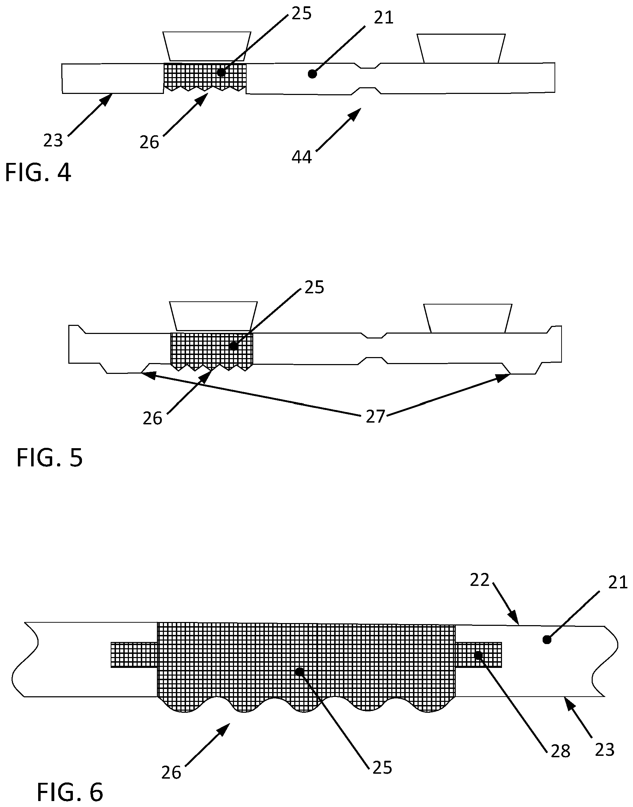

FIG. 4 zeigt eine Schnittdarstellung der Trageeinrichtung mit versenkter Thermozone gemäß einem Ausführungsbeispiel, das nicht Teil der Erfindung ist. Zum Transport von Wärmeenergie zwischen der unteren Fläche 23 und der oberen Fläche 22 erstreck sich die Thermozone 25 zumindest von der die Thermozone umgebenden oberen Fläche 22 bis zur von der die Thermozone umgebenden unteren Fläche 23 der Trageeinrichtung 20. Um die Wärmeübertragung weiter zu verbessern, ist die Thermozone 25 bevorzugt so gestaltet, dass sie in direktem Kontakt mit dem Speisebehältnis 24 steht.

Wie in FIG. 4 zu erkennen ist, ist die Thermozone 25 an der unteren Fläche 26 bevorzugt strukturiert ausgebildet, um deren Oberfläche zur Aufnahme der eingeleiteten Wärmeenergie zu vergrößern. Die Thermozone ist so in den Träger 21 integriert, dass die erhabenen Bereiche der strukturierten Oberfläche 26 bündig mit der unteren Fläche 23 des Trägers abschließen. So lässt sich vermeiden, dass eine auf einer ebenen Oberfläche abgestellte Trageeinrichtung 20 wackelt.

FIG. 5 zeigt eine Schnittdarstellung der Trageeinrichtung 20 mit zwei Erhebungen 27, an deren unteren Fläche 23 gemäß der Erfindung. Hier ist die Thermozone so in den Träger 21 integriert, dass die tiefen Bereiche der strukturierte Oberfläche 26 bündig mit der unteren Fläche 23 des Trägers abschließen und die erhabenen Bereiche über die unteren Fläche 23 des Trägers hinaus ragen. Um einen guten Stand auf einer ebenen Fläche zu erreichen, sind die beiden Erhebungen 27 an der unteren Fläche der Trageeinrichtung 20 so bemessen, dass sie über die erhabenen Bereiche der strukturierten Oberfläche 26 der Thermozone hinaus ragen. Eine solche Trageeinrichtung 20 ermöglicht eine weiter verbesserte Wärmeübertragung. Außerdem lässt sich die Trageeinrichtung 20 auch auf vielen unebenen Oberflächen wackelfrei abstellen.

FIG. 6 zeigt eine vergrößerte Schnittdarstellung einer Thermozone 25 mit einstückig angeformten Rand 28 in der Trageeinrichtung 20 gemäß einem erfindungsgemäßen Ausführungsbeispiel. Der einstückig angeformte Rand 28 ist zwischen der oberen Fläche 22 und der unteren Fläche 23 der Trageeinrichtung in dem Träger 21 eingebettet. Der einstückig angeformte Rand 28 der Thermozone ist, soweit er in den Träger 21 ragt, vollständig durch das Material des Trägers umschlossen. Der eingebettete Rand 28 erhöht die mechanische Tragfähigkeit der Thermozone 25 erheblich. So können auch schwere Speisen und/oder schwere Speisebehältnisse 24 auf der Thermozone aufgenommen werden. Es wird damit verhindert, dass die Gewichtskraft der Speisen oder Speisebehältnisse 24 die Thermozone aus der Trageeinrichtung 20 nach unten herausdrückt.

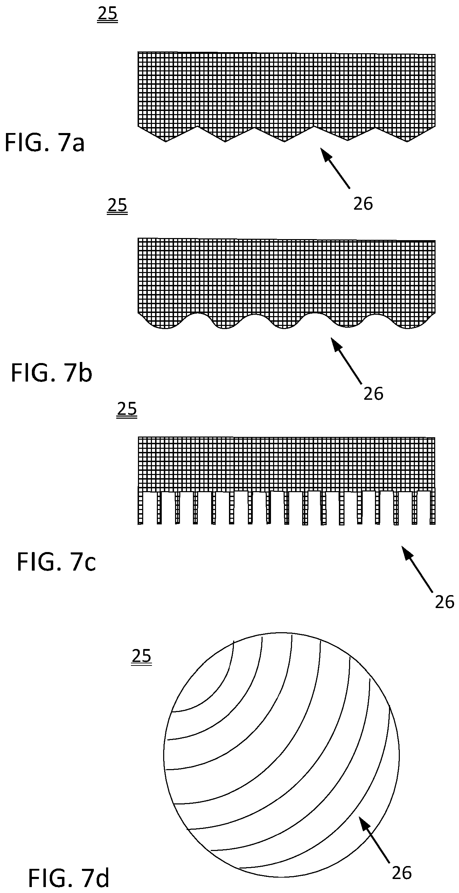

In FIG. 7a ist eine im Querschnitt dreieckförmig strukturierter untere Fläche 26 der Thermozone gemäß einem erfindungsgemäßen Ausführungsbeispiel in Schnittdarstellung dargestellt. Durch die Dreiecksstruktur wird die Oberfläche vergrößert und damit die Wärmeübertragung verbessert. Eine solche Struktur lässt sich besonders einfach durch spanabhebende Bearbeitungsmethoden herstellen. Eine weitere Herstellungsmethoden für eine solche Struktur stellt ein Strangpressverfahren oder ein Spritzgussverfahren dar.

In FIG. 7b ist eine im Querschnitt wellenförmig strukturierter unteren Fläche 26 der Thermozone 25 gemäß einem weiteren Ausführungsbeispiel dargestellt. Die Wellenstruktur zeichnet sich durch eine besonders gute Reinigungsfreundlichkeit aus. Diese Struktur weist keine Ecken und Kanten auf. Somit kann ausgeschlossen werden, dass sich Verunreinigungen in der Struktur festsetzen. Als Herstellungsmethoden ist beispielsweise ein Strangpressverfahren oder ein Spritzgussverfahren geeignet.

Werden besondere Anforderungen an die Übertragung der Wärmeenergie gestellt, ist die in FIG. 7c dargestellte Thermozone 25 mit einer im Querschnitt lamellenförmig strukturierten unteren Fläche 26 vorgesehen. Hier kann abhängig von der Dimensionierung der Lamellen eine sehr große Oberfläche erzeugt werden. Mit steigender Oberflächengröße steigt auch die Aufnahmefähigkeit bezüglich der Wärmeenergie aus einem durchströmenden Luftstrom.

Die Strukturen der unteren strukturierten Flächen 26 der Thermozone sind nicht auf eine Dreiecks-, Wellen- oder Lamellengeometrie begrenzt. Zur Vergrößerung der Oberfläche sind beliebige weitere geeignete Strukturen anwendbar.

FIG. 7d zeigt eine Thermozone 25 mit bogenförmig angeordneter Struktur an deren unteren Fläche 26 gemäß einem erfindungsgemäßen Ausführungsbeispiel. Dabei ist die Bogenform an die Strömungsverhältnisse zwischen den Austrittsöffnungen für den temperierten Luftstrom und den ansaugenden Ventilator angepasst. So lässt sich eine gleichmäßige Wärmeverteilung und eine optimale Übergabe der Wärmeenergie erreichen. Eine optimale Wärmeverteilung wird durch einen verwirbelungsarmen Luftstrom erreich, der durch die bogenförmige Struktur unterstützt wird. Mit der bogenförmigen Struktur wird der Luftstrom von der Ausrichtung der Austrittsöffnungen strömungsgünstig in Richtung Ventilator geleitet und somit eine Verwirbelung vermieden. Werden Verwirbelungen nicht vermieden und ein laminarer Luftstrom nicht bevorzugt, kommt es zu Bereichen unterschiedlicher Temperaturen, wodurch die Speisen nachteilig ungleichmäßig erwärmet werden.

## Patentansprüche

1. Eine Trageeinrichtung (20) für Speisen aufweisend:
einen Träger (21), der eine obere Fläche (22) und eine untere Fläche (23) aufweist, wobei Speisen und/oder Speisebehältnisse (24) auf die obere Fläche (22) aufbringbar sind,
wobei die Trageeinrichtung (20) mindestens eine Thermozone (25) zum Transport von Wärmeenergie zwischen der unteren (23) und der oberen Fläche (22) aufweist,
wobei die Thermozone (25) aus einem thermisch leitfähigen Material ausgebildet ist,
wobei sich die Thermozone (25) zumindest von der die Thermozone umgebenden oberen Fläche (22) bis zur die Thermozone umgebenden unteren Fläche (23) der Trageeinrichtung (20) erstreckt,
**dadurch gekennzeichnet, dass**
die Thermozone (25) an der unteren Fläche (26) zur Aufnahme der eingeleiteten Wärmeenergie strukturiert ausgebildet ist,
wobei tiefe Bereiche der strukturierten Oberfläche (26) bündig mit der unteren Fläche (23) des Trägers (21) abschließen und erhabene Bereiche über die untere Fläche (23) des Trägers (21) hinausragen, und
wobei die Trageeinrichtung an deren unteren Fläche (23) mindestens zwei Erhebungen (27) aufweist, die über die erhabenen Bereiche der strukturierten Oberfläche (26) der Thermozone (25) hinausragen.

2. Die Trageeinrichtung (20) nach Anspruch 1,
wobei die Thermozone (25) aus einem Metall, bevorzugt aus einer Aluminiumlegierung, oder einem thermisch leitfähigen Kunststoff mit einer Wärmeleitfähigkeit von 5 W/mK bis 20 W/mK, bevorzugt mit einer Wärmeleitfähigkeit von 10 W/mK bis 20 W/mK, besonders bevorzugt mit einer Wärmeleitfähigkeit von 15 W/mK bis 20 W/mK besteht,
und/oder wobei die Thermozone (25) in direktem Kontakt mit dem Speisebehältnis (24) steht.

3. Die Trageeinrichtung (20) nach Anspruch 1 oder 2,
wobei die strukturierte untere Fläche (26) eine Lamellenform oder eine Wellenstruktur aufweist.

4. Die Trageeinrichtung nach einem der Ansprüche 1 bis 3,
wobei die strukturierte Fläche (26) so geformt ist, dass ein darauf gerichteter temperierter Luftstrom in eine vorherbestimmte Richtung gelenkt wird.

5. Die Trageeinrichtung nach einem der Ansprüche 1 bis 4,
wobei die Thermozone (25) einen einstückig angeformten Rand (28) aufweist, der zwischen der oberen Fläche (22) und der unteren Fläche (23) des Trägers (21) eingebettet ist.

6. Die Trageeinrichtung nach einem der Ansprüche 1 bis 5,
wobei die Trageeinrichtung (20) einen verjüngten Aufnahmebereich (44) aufweist, der dazu ausgelegt ist, durch eine thermische Trennwand (6) durchzureichen, wobei der verjüngte Aufnahmebereich (44) sich längs einer Einschieberichtung in ein System (1) zur Temperierung oder Erhitzung von Speisen erstreckt.

7. Die Trageeinrichtung nach einem der Ansprüche 1 bis 6,
wobei die Trageeinrichtung (20) einen Halter (43) zur Aufnahme einer Beschriftung und/oder einer Informationskarte aufweist.

8. Die Trageeinrichtung nach Anspruch 7,
wobei der Halter (43) auf der Trageeinrichtung (20) in einem vorderen Randbereich angeordnet ist, so dass die Beschriftung und/oder Informationskarte lesbar ist, wenn die Trageeinrichtung (20) in das System (1) zum Temperieren von Speisen eingeschoben ist.

9. Die Trageeinrichtung nach Anspruch 7 oder 8,
wobei der Halter (43) so angeordnet ist, dass die Beschriftungen und/oder Informationskarte in einem Winkel von 30° bis 50°, bevorzugt von 40° bis 45°, zur oberen Fläche (22) der Trageeinrichtung (20) ausgerichtet lesbar ist.

10. Die Trageeinrichtung nach einem der Ansprüche 7 bis 9,
wobei der Halter (43) und der Träger (21) einstückig ausgeführt sind.

## Claims

1. Supporting device (20) for food, having:
a support (21) which has an upper surface (22) and a lower surface (23), wherein food and/or food containers (24) are able to be brought onto the upper surface (22), wherein the supporting device (20) has at least one thermal zone (25) for transport of thermal energy between the lower surface (23) and the upper surface (22),
wherein the thermal zone (25) is formed from a thermally conductive material,
wherein the thermal zone (25) extends at least from the upper surface (22), which surrounds the thermal zone, to the lower surface (23), which surrounds the thermal zone, of the supporting device (20),
**characterized in that**
the thermal zone (25) is formed with structuring on the lower surface (26) in order to absorb the thermal energy introduced,
wherein low regions of the structured surface (26) terminate flush with the lower surface (23) of the support (21) and raised regions project beyond the lower surface (23) of the support (21), and
wherein the supporting device has on its lower surface (23) at least two elevations (27) which project beyond the raised regions of the structured surface (26) of the thermal zone (25).

2. Supporting device (20) according to Claim 1,
wherein the thermal zone (25) is composed of a metal, preferably an aluminium alloy, or a thermally conductive plastic having a thermal conductivity of 5 W/mK to 20 W/mK, preferably having a thermal conductivity of 10 W/mK to 20 W/mK, particularly preferably having a thermal conductivity of 15 W/mK to 20 W/mK, and/or wherein the thermal zone (25) is in direct contact with the food container (24).

3. Supporting device (20) according to Claim 1 or 2,
wherein the structured lower surface (26) has the form of lamellae or has a wave structure.

4. Supporting device according to one of Claims 1 to 3,
wherein the structured surface (26) is shaped in such a way that a temperature-controlled air stream directed onto it is diverted into a predetermined direction.

5. Supporting device according to one of Claims 1 to 4,
wherein the thermal zone (25) has an edge (28) which is formed in one piece thereon and which is embedded between the upper surface (22) and the lower surface (23) of the support (21).

6. Supporting device according to one of Claims 1 to 5,
wherein the supporting device (20) has a tapered receiving region (44) which is formed to pass through a thermal partition wall (6), wherein the tapered receiving region (44) extends along a push-in direction into a system (1) for temperature control or heating of food.

7. Supporting device according to one of Claims 1 to 6,
wherein the supporting device (20) has a holder (43) for receiving a label and/or an information card.

8. Supporting device according to Claim 7,
wherein the holder (43) is arranged on the supporting device (20) in a front edge region so that the label and/or information card is legible when the supporting device (20) has been pushed into the system (1) for temperature control of food.

9. Supporting device according to Claim 7 or 8,
wherein the holder (43) is arranged in such a way that the labels and/or information card are/is legible oriented at an angle of 30° to 50°, preferably of 40° to 45°, to the upper surface (22) of the supporting device (20).

10. Supporting device according to one of Claims 7 to 9,
wherein the holder (43) and the support (21) are designed in one piece.

## Revendications

1. Dispositif porteur (20) pour aliments, présentant :
un support (21) qui présente une surface supérieure (22) et une surface inférieure (23), des aliments et/ou des récipients alimentaires (24) pouvant être appliqués sur la surface supérieure (22),
le dispositif porteur (20) présentant au moins une zone thermique (25) pour le transport d'énergie thermique entre la surface inférieure (23) et la surface supérieure (22),
la zone thermique (25) étant formée à partir d'un matériau thermoconducteur,
la zone thermique (25) s'étendant au moins de la surface supérieure (22) entourant la zone thermique à la surface inférieure (23) du dispositif porteur (20) entourant la zone thermique,
**caractérisé en ce que**
la zone thermique (25) est réalisée sous forme structurée sur la surface inférieure (26) pour absorber l'énergie thermique introduite,
des zones profondes de la surface structurée (26) affleurant avec la surface inférieure (23) du support (21) et des zones surélevées faisant saillie au-delà de la surface inférieure (23) du support (21), et
le dispositif porteur présentant, sur sa surface inférieure (23), au moins deux saillies (27) qui font saillie au-delà des zones surélevées de la surface structurée (26) de la zone thermique (25).

2. Dispositif porteur (20) selon la revendication 1,
la zone thermique (25) étant constituée d'un métal, de préférence d'un alliage d'aluminium, ou d'une matière plastique thermiquement conducteur ayant une conductivité thermique de 5 W/mK à 20 W/mK, de préférence ayant une conductivité thermique de 10 W/mK à 20 W/mK, de manière particulièrement préférée ayant une conductivité thermique de 15 W/mK à 20 W/mK, et/ou la zone thermique (25) étant en contact direct avec le récipient alimentaire (24).

3. Dispositif porteur (20) selon la revendication 1 ou 2,
la surface inférieure structurée (26) présentant une forme de lamelle ou une structure ondulée.

4. Dispositif porteur selon l'une quelconque des revendications 1 à 3,
la surface structurée (26) étant formée de telle sorte qu'un flux d'air à température régulée dirigé sur celle-ci soit dévié dans une direction prédéterminée.

5. Dispositif porteur selon l'une quelconque des revendications 1 à 4,
la zone thermique (25) présentant un bord (28) formé d'une seule pièce, lequel est noyé entre la surface supérieure (22) et la surface inférieure (23) du support (21).

6. Dispositif porteur selon l'une quelconque des revendications 1 à 5,
le dispositif porteur (20) présentant une zone de réception rétrécie (44), qui est conçue pour traverser une paroi de séparation thermique (6), la zone de réception rétrécie (44) s'étendant, le long d'une direction d'insertion, dans un système (1) de régulation de température ou de chauffage d'aliments.

7. Dispositif porteur selon l'une quelconque des revendications 1 à 6,
le dispositif porteur (20) présentant un organe de maintien (43) destiné à recevoir une inscription et/ou une carte d'information.

8. Dispositif porteur selon la revendication 7,
l'organe de maintien (43) étant disposé sur le dispositif porteur (20) dans une zone de bord avant, de telle sorte que l'inscription et/ou la carte d'information est lisible lorsque le dispositif porteur (20) est inséré dans le système (1) de régulation de température d'aliments.

9. Dispositif porteur selon la revendication 7 ou 8,
l'organe de maintien (43) étant disposé de telle sorte que les inscriptions et/ou la carte d'information sont lisibles selon un angle de 30° à 50°, de préférence de 40° à 45°, par rapport à la surface supérieure (22) du dispositif porteur (20).

10. Dispositif porteur selon l'une quelconque des revendications 7 à 9,
l'organe de maintien (43) et le support (21) sont réalisés d'une seule pièce.
